# EUROPEAN PATENT APPLICATION

(11) **EP 1 543 795 A1**
(43) Date of publication of application: **22.06.2005**
(21) Application number: 03029094.4
(22) Date of filing: 17.12.2003
(51) Int. Cl.: A61C 5/06, A61C 1/16

(54) **A single-use dispensing tip for a multiple-use dental material dispensing cartridge and dental material application system comprising such tip**

(71) Applicant: DENTSPLY DETREY GmbH, 78467 Konstanz (DE)
(72) Inventor: Grützner, Andreas E., Dr., 78479 Reichenau (DE)
(74) Representative: Hartz, Nikolai F., Dr.

(57) **Abstract**

A single-use dispensing tip for a multiple-use high-viscous dental material dispensing cartridge insertable into an application ejector device, said dispensing tip comprising: (a) a tubular part with a proximal end adapted for receiving a dispensing tube of said cartridge or with a proximal end adapted for insertion into an opening in said cartridge, and a distal end having a dispensing orifice, and (b) a shielding element having a side facing an oral environment and an opposite side facing away from the oral environment, whereby said shielding element shields against the oral environment during use.

## Description

### Technical field and background of the invention

The present invention relates to a single-use dispensing tip for a multiple-use high-viscous dental material dispensing cartridge and a high-viscous dental material application system comprising such tip.

In the dental field two container systems are mainly used for storing and applying high-viscous dental materials such as gel-like and paste-like materials: Multiple-use syringes having one or two chambers are used, such as the system "DeTrey Conditioner 36". Such syringes have the advantage that dental material can be used effectively. Hence, the costs and waste of dental material are low. For hygienic reasons, a tip - such as a cannula - mountable on such syringes for application of dental material to the application site in the oral cavity is used for each patient. However, even the employment of such single-use tips for treatment of each patient leads to cross-contaminations and cross-infections of different patients treated with the same syringe. Namely, the syringe body containing the dental material is contacted during application of the dental material in the oral cavity of a patient with saliva or other body fluids of the patient. Moreover, the hands or gloves of the user applying dental material to a patient is contacted with saliva or other body fluids of the patient. Since such syringes containing sensitive dental materials cannot be disinfected by autoclave treatment, cross-contaminations and cross-infections of different patients treated with the same syringe cannot be avoided.

On the other hand, capsule-like single-use cartridges are used for applying e.g. dental filling material into a tooth cavity. Such cartridges are designed for cooperating with an accommodated application ejector device. Systems of such cartridges and application ejector devices are disclosed in EP 0 145 922 A2 and EP 0 744 161 A1. Such systems have the advantage that the application ejector devices may be disinfected by autoclaving, and thus it may be used repeatedly. If used appropriately, the application ejector device is disinfected before using it with a patient. A cartridge usable with such application ejector device contains dental material in an amount sufficient in average for application to one patient. If used appropriately, at least one cartridge is needed for one patient. Namely, such a cartridge is used only for one patient and it is disposed after use. Hence, cross-contamination and cross-infections of patients are generally avoided. However, in case that only a small amount of dental material is needed for one patient, a large amount of dental material is wasted. Further, in case that a large amount of dental material is needed for one patient, a further cartridge may be necessary, and the amount of dental material remaining in the further cartridge after use may be also a large amount of dental material which is wasted. This drawback has led to the practice of some users to reuse cartridges containing still large amounts of dental material. Since such cartridges cannot be disinfected by autoclaving a thorough disinfection is not possible. Hence, cross-contamination and cross-infections of patients treated with dental material from the same cartridge are a problem.

Hence, it is the object of the present invention to overcome the drawbacks of the systems according to the prior art. Particularly, it is the object of the present invention to provide a single-use dispensing tip for a multiple-use high-viscous dental material dispensing cartridge and a high-viscous dental material application system comprising such tip, whereby cross-contaminations and cross-infections of patients during use of the multiple-use cartridges is prevented.

### Summary of the present invention

The present invention provides under a first aspect a single-use dispensing tip for a multiple-use high-viscous dental material dispensing cartridge insertable into an application ejector device, said dispensing tip comprising:
(a) a tubular part with
   (a-1) a proximal end adapted for receiving a dispensing tube of said cartridge, and
   (a-2) a distal end having a dispensing orifice, and
(b) a shielding element having a side facing an oral environment and an opposite side facing away from the oral environment, whereby said shielding element shields against the oral environment during use.

Further, the present invention provides as an alternative solution to the above problem under a second aspect a single-use dispensing tip for a multiple-use high-viscous dental material dispensing cartridge insertable into an application ejector device, said dispensing tip comprising:
(A) a tubular part with
   (A-1) a proximal end adapted for insertion into an opening in said cartridge, and
   (A-2) a distal end having a dispensing orifice, and
(B) a shielding element having a side facing an oral environment and an opposite side facing away from the oral environment, whereby said shielding element shields against the oral environment during use.

In preferred embodiments of the above dispensing tips of the present invention, the shielding element is provided at the proximal end of the tubular part. Furthermore, the shielding element may be a circular disc collar which is preferably flexible.

Further, the shielding element may comprise an elastic envelope. According to a preferred embodiment of the present invention, the elastic envelope may be a flexible tubular sheath with a first and second end, whereby said first end is connected to the tubular part. This embodiment has the advantage that the elastic envelope is accommodated to the shape of a tubular distal end of a multiple-use application ejector device. Hence, the user has good sight when applying dental material to an application site within the mouth of a patient. Further, the handling of such a system is advantageously improved. Particularly preferred is an embodiment, whereby such second end can be tightened, preferably by a cord or ribbon. According to another embodiment of the present invention a tightening means, such as a clamping device, may be provided at the application ejector device. Such clamping device can be for example a sleeve which may be slid over the second end of the flexible tubular sheath of the elastic envelope. Furthermore, the elastic envelope may be folded up or rolled up prior to use. This embodiment has the advantage that the shielding element of the single-use dispensing tip of the present invention may cover a large portion of the application ejector device in which the cartridge on which the tip is to be mounted may be shielded. Nevertheless, such system is ready to use in a very short time. Hence, expensive time is saved at the chair-side treatment, while cross-contaminations and cross-infections can be avoided.

According to a further preferred embodiment of the tip of the present invention, the tubular part can be bent for accommodating the oral situation.

In a further preferred embodiment of the present invention, the proximal end of the tubular part of the dispensing tip is adapted for engaging with the dispensing tube of a cartridge or an opening in said cartridge, respectively, with a positive lock. Such positive lock may be achieved by a thread, a bayonet locking, or a snapping connection.

Under a third aspect the present invention provides a high-viscous dental material application system comprising:
(a) an application ejector device comprising
   (a-1) a cartridge receiving section having an opening and an aperture in its wall, and
   (a-2) a movable plunger;
(b) a multiple-use high-viscous dental material cartridge for insertion into said cartridge receiving section through said opening, said cartridge having
   (b-1) a cartridge body with a proximal end and a distal end, said cartridge body containing an amount of high-viscous dental material sufficient for application to more than one patient,
   (b-2) a dispensing tube at the distal end, said dispensing tube being adapted for
      (i) insertion through said aperture in the wall of said cartridge receiving section,
      (ii) protruding with a terminal section beyond said aperture, said terminal section alternately receiving a cap or a dispensing tip according to claim 1, and
   (b-3) a movable piston adapted to be moved by said movable plunger for dispensing said dental material out of said dispensing tube; and
(c) the dispensing tip according to the first aspect of the present invention.

In the above described system the length of said tubular part is preferably greater than the length of said dispensing tube. Further, the terminal section of said dispensing tube may be tapered. According to a further embodiment of the system of the present invention, said dispensing tube may be oriented at an angle of 0 to 90°, preferably 0 or about 45°, to the longitudinal axis of said cartridge body.

Under a fourth aspect, the present invention provides as an alternative solution a high-viscous dental material application system comprising:
(A) an application ejector device comprising
   (A-1) a cartridge receiving section having an opening and an aperture in its wall, and
   (A-2) a movable plunger;
(B) a multiple-use high-viscous dental material cartridge for insertion into said cartridge receiving section through said opening, said cartridge having
   (B-1) a cartridge body with a proximal end and a distal end, said cartridge body containing an amount of high-viscous dental material sufficient for application to more than one patient,
   (B-2) a cartridge opening at the distal end, said cartridge opening being adapted for alternately receiving a plug or the proximal end of the tubular part of the single-use dispensing tip according to claim 2, and
   (B-3) a movable piston adapted to be moved by said movable plunger for dispensing said dental material out of said cartridge opening; and
(C) the dispensing tip according to the second aspect of the present invention.

In the application system according to the fourth aspect of the present invention, the cartridge opening may be oriented at an angle of 0 to 90°, preferably 0 or about 45°, to the longitudinal axis of the cartridge body.

Now preferred embodiments according to both the third and fourth aspect of the present invention are described.

According to a preferred embodiment of the system of the present invention, the shielding element of said dispensing tip may have a proximal surface matching with the opposing surface of said application ejector device. More preferably, the shielding element, preferably a collar, may be adapted for being received by said aperture in said application ejector device. Furthermore, a system is preferred, whereby the tubular part and/or shielding element of the dispensing tip is adapted for engagement with said dispensing tube or cartridge opening of said cartridge and/or said aperture in said application ejector device with a positive lock. Sucha positive lock may be achieved by a thread, a bayonet locking, or a snapping connection, whereby a bayonet locking and a snapping connection are particularly preferred due to a very short time for locking and unlocking such positive lock.

Further systems are preferred, whereby the contact surfaces between the dispensing tip and the application ejector device are adapted for a snug fit, such that the contact surfaces of the dispensing tip and application ejector device are snugly fitting. Thus, creeping of dental material into a space between the tubular part dispensing tip and the tubular body is essentially avoided.

Furthermore, the cartridge body may have an information carrying surface layer.

Moreover, a system of the present invention is preferred, whereby said application ejector device comprises a lid for closing the opening of said cartridge receiving section. This embodiment has the advantage that a cartridge may be shielded completely and reliably during application of a dental material against the oral environment during use. Such lid may be connected to said application ejector device e.g. by a snapping connection. Preferably, the lid may be slid to the cartridge receiving section. More preferably, such lid may be hinged to said cartridge receiving section. This embodiment has the advantage that the lid cannot be lost or that a lid which has not been disinfected is connected to an application ejector device.

Furthermore, it is preferred that the cartridge receiving section is connected to the application ejector device such that the cartridge receiving section can be rotated with regard to the longitudinal axis of the movable plunger of the application ejector device. This embodiment has the advantage that an application site which is hardly accessible can be reached easily when a cartridge having a dispensing tube oriented at an angle of about 45° to the longitudinal axis of the cartridge body is used.

According to a preferred embodiment of the present invention, the multiple-use high-viscous dental material dispensing cartridge is made of plastic material, preferably rigid molded thermoplastic material. Furthermore, it is preferred that the high viscous dental material is a dental filling material, preferably curable by visible light. Accordingly, it is preferred that the multiple-use high-viscous dental material dispensing cartridge is opaque to radiation of visible light.

### Brief description of the drawings

Fig. 1 is a side view of a high-viscous dental material application system according to the present invention.
Fig. 2A is a sectional side view of the distal portion of the dissembled high-viscous dental material application system according to Fig. 1.
Fig. 2B is a front view of the system of Fig. 2A without a cartridge.
Fig. 3 is a sectional side view of a distal portion of a further embodiment of a dissembled high-viscous dental material application system according to the present invention.
Fig. 4 is a front view of a further embodiment of the high-viscous dental material application system of the present invention.
Fig. 5 is a perspective view of a single-use dispensing tip according to the present invention.
Fig. 6A is a sectional side view of a distal portion of a further embodiment of a dissembled high-viscous dental material application system according to the present invention.
Fig. 6B is a front view of the system illustrated in Fig. 6A.
Fig. 6C is a front view of a further embodiment of the high-viscous dental material application system of the present invention.
Fig. 7A is a sectional side view of a distal portion of a further embodiment of a dissembled high-viscous dental material application system according to the present invention.
Fig. 7B is a front view of the system illustrated in Fig. 7A without cartridge and tip.
Fig. 8 is a front view of a further embodiment of a cartridge receiving section and a lid of a high-viscous dental material application system according to the present invention.
Fig. 9A is a sectional top view of a distal portion of a further embodiment of a dissembled high-viscous dental material application system according to the present invention.
Fig. 9B is a front view of the system illustrated in Fig. 9A.
Fig. 10 is a front view of a further embodiment of a cartridge receiving section and
a lid of a high-viscous dental material application system according to the present invention.
Fig. 11 is a front view of a further embodiment of a cartridge receiving section and
a lid of a high-viscous dental material application system according to the present invention.
Fig. 12 is a sectional side view of a further embodiment of a single-use dispensing tip according to the present invention.
Fig. 13 is a sectional side view of a further embodiment of a single-use dispensing tip according to the present invention.
Fig. 14 is a sectional side view of a further embodiment of a single-use dispensing tip according to the present invention.
Fig. 15A-C are sectional side views of a distal portion of a further embodiment of a dissembled and assembled high-viscous dental material application system according to the present invention.
Fig. 16 is a sectional side view of a distal portion of a further embodiment of an assembled high-viscous dental material application system according to the present invention.
Fig. 17A-B are sectional side views of a distal portion of a further embodiment of a dissembled and assembled high-viscous dental material application system according to the present invention.
Fig. 18A is a top view of a cartridge receiving section of a further embodiment of a high-viscous dental material application system according to the present invention.
Fig. 18B is a sectional side view of the cartridge receiving section illustrated in Fig. 18A with a cartridge.
Fig. 18C is a front view of the cartridge receiving section illustrated in Fig. 18A and 18B.
Fig. 19A is a sectional side view of a lid adapted to the cartridge receiving section illustrated in Fig. 18A-C.
Fig. 19B is a front view of the lid illustrated in Fig. 19A.
Fig. 20A is a top view of a cartridge receiving section of a further embodiment of a high-viscous dental material application system according to the present invention.
Fig. 20B is a sectional side view of the cartridge receiving section illustrated in Fig. 20A with a cartridge.
Fig. 20C is a front view of the cartridge receiving section illustrated in Fig. 20A and 20B.
Fig. 21A is a sectional side view of a lid adapted to the cartridge receiving section illustrated in Fig. 20A-C.
Fig. 21 B is a front view of the lid illustrated in Fig. 21A.
Fig. 22A is a sectional side view of a distal portion of a further embodiment of a dissembled high-viscous dental material application system according to the present invention.
Fig. 22B is a front view of the system illustrated in Fig. 22A without cartridge and dispensing tip.
Fig. 23A is a sectional side view of a cartridge receiving section and a cartridge of a further embodiment of a high-viscous dental material application system according to the present invention.
Fig. 23B is a front view of the cartridge receiving section illustrated in Fig. 23A.
Fig. 24A is a sectional side view of a distal portion of a further embodiment of a dissembled high-viscous dental material application system according to the present invention.
Fig. 24B is a front view of the cartridge receiving section and lid illustrated in Fig. 24A without cartridge and dispensing tip.

### Detailed description of the preferred embodiments

The present invention is now described in further detail with reference to the accompanying drawings. Corresponding or equivalent elements of the high-viscous dental material application systems illustrated in different drawings are designated with the same reference signs.

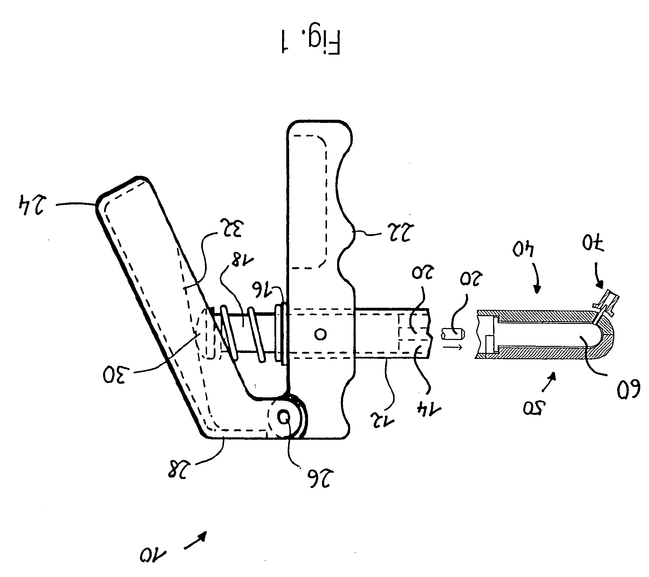

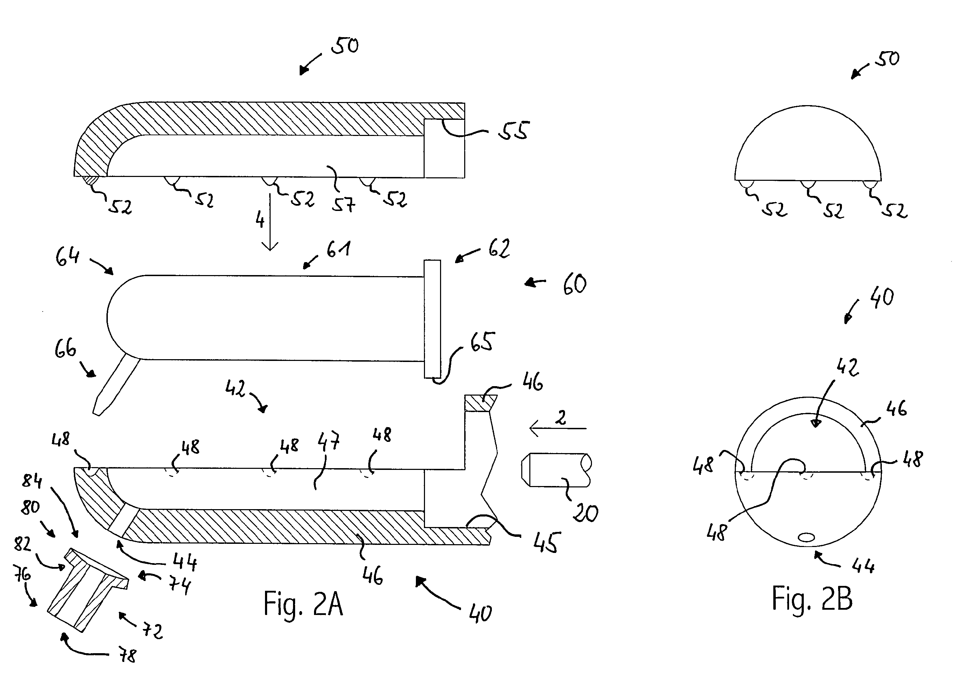

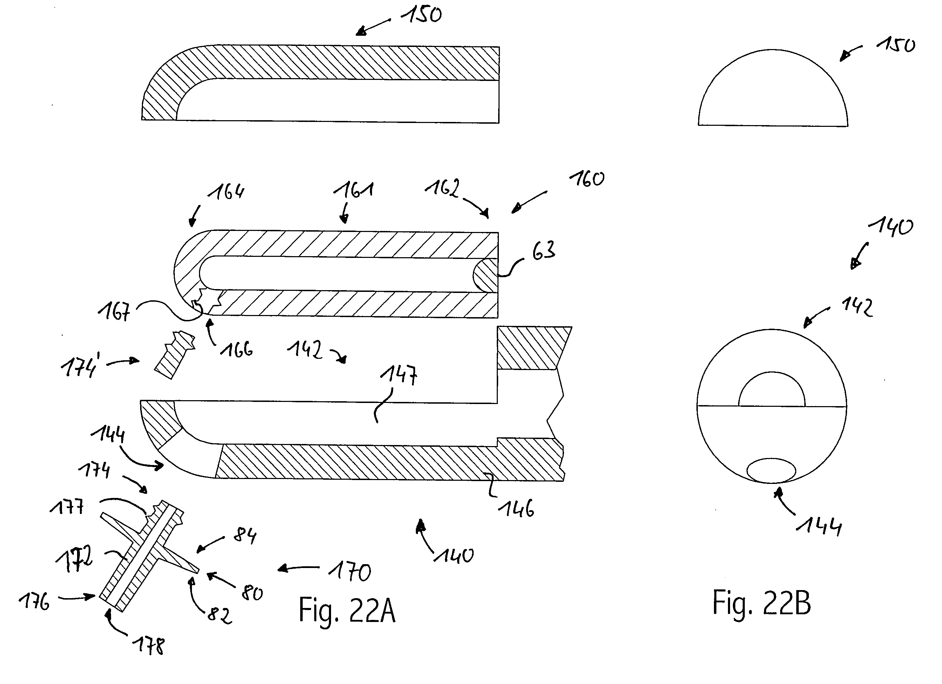

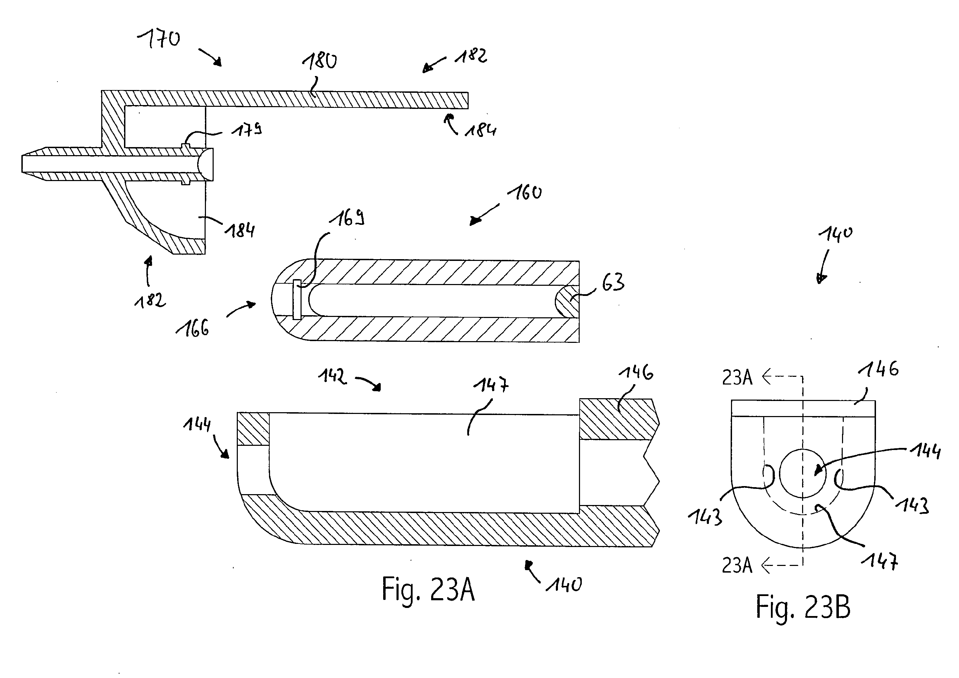

Fig. 1 shows a high-viscous dental material application system according to the third aspect of the present invention. This application system comprises the application ejector device 10 comprising a barrel 12 having an interior bore 14 extending from the rearward end 16 of the barrel toward the forward end thereof for purposes of receiving a movable plunger 18 of the same diameter as that of the interior bore 14 for the major portion of the length of the plunger, the forward end of the plunger having a smaller diameter extension 20. The rearward end 16 of the barrel 12 extends through and is fixed to a handle member 22 with which the barrel 12 is perpendicular. Pivotally connected to the handle 22 is an operating lever 24, the upper end of which is pivotally connected to the upper end of handle 22 by a pivot pin 26. The upper end 28 of operating lever 24 is offset laterally to facilitate operation of the lever 24 with respect to the outer end of plunger 18 which terminates in a button 30 engageable by the inner surface 32 of operating lever 24. The above described elements represent a specific embodiment of a conventional application ejector device. The distal end of the barrel 12 is shown in a sectional view and embodies the principles of the present invention. Namely, the application ejector device 10 of the system of the present invention comprises a cartridge receiving section 40 closed by the lid 50. A multiple-use high-viscous dental material cartridge 60 is inserted into the cartridge receiving section 40. Further, a single-use dispensing tip 70 for the multiple-use high-viscous dental material dispensing cartridge 60 inserted into the application ejector device 10 is shown. Details thereof are illustrated in Fig. 2A showing in a sectional side view the distal portion of the dissembled high-viscous dental material application system according to Fig. 1. The cartridge receiving section 40 has an opening 42 and an aperture 44 in its wall 46. The multiple-use high-viscous dental material cartridge 60 is insertable into the cartridge receiving section 40 through the opening 42. The cartridge 60 has a cartridge body 61 with the proximal end 62 and the distal end 64. The cartridge body 61 contains an amount of high-viscous dental material sufficient for application to more than one patient. Further, the cartridge 60 comprises a dispensing tube 66 at the distal end 64. The dispensing tube 66 is adapted for insertion through the aperture 44 in the wall 46 of the cartridge receiving section 40. Moreover, the dispensing tube 66 is adapted for protruding with a terminal section beyond said aperture 44. The terminal section may alternately receive a cap (not shown) or the dispensing tip 70 according to the first aspect of the present invention. Further, the cartridge body 61 between the first 62 and second end 64 has preferably a tubular shape as illustrated in Fig. 2A. It is closed at the first end 62 by a movable piston 63 (Fig. 22A, 23A and 24A) adapted for cooperation with the movable plunger 20 for dispensing the dental material out of the dispensing tube 66, when the movable plunger 20 is moved in the direction as indicated by arrow 2. The piston 63 is preferably complementary in shape to the inner surface of the second end 64 of the cartridge. This embodiment is particularly advantageous for efficient employment of dental material, since this complementary design allows to dispense dental material almost completely out of the cartridge 60. More preferably, the second end 64 of the cartridge body 61 has a hemispherical shape as shown in Fig. 22A and 23A. The first end 62 of the cartridge 60 may have an annular circular exterior flange 65 as shown in Fig. 2A. This exterior flange 65 may be useful for improving the seat and/or lock or catch of a cartridge in the cartridge receiving section 40. The catch or lock in the cartridge receiving section may be improved in case that a recess 45 is provided in the wall 46 for accommodation of the exterior flange 65. The exterior flange 65 and recess 45 are particularly preferred in case that no lid is foreseen for the system of the present invention as shown e.g. in Fig. 17B. The dispensing tube 66 shown in Fig. 2A is oriented at an angle of about 45° to the longitudinal axis of said cartridge body 61. The terminal section of the dispensing tube 66 is tapered. The aperture 44 in the wall 46 of the cartridge receiving section is provided at a location corresponding to the angled orientation of the dispensing tube 66. The lid 50 is preferably complementary in shape to the outer surface of the cartridge 60 and the opening 42 in the wall 46 of the cartridge receiving section 40. Particularly, the inner surface 57 of the lid is complementary in shape to the shape of the outer surface of the cartridge body 61. Thus, the lid 50 has also a recess 55 in the inner surface adapted for accommodating the exterior flange 65 of the cartridge 60. Moreover, the inner surface 47 of the cartridge receiving section is preferably complementary in shape to the outer surface of the cartridge body 61 of the cartridge 60. Thus, the shape of the cartridge receiving section 40 which is closed by the lid 50 has preferably a mainly tubular elongate shape which is advantageous for applying dental material to an application site in the oral cavity. Namely, such elongate shape facilitates the sight of the user who applies dental material into the oral cavity. The lid 50 is connectable to the cartridge receiving section 40 by means of the protrusions 52 adapted for providing a snapping connection with corresponding recesses 48 provided in the wall 46. In Fig. 2A the protrusions 52 are designed as hemispherical knobs, and the recesses 48 are designed as corresponding hemispherical hollows or cavities. According to another embodiment of the present invention, the protrusions 52 and recesses 48 act as guiding means for placing the lid snugly onto the opening 42 in the cartridge receiving section 40 when the lid 50 is placed downwards onto the cartridge receiving section as indicated by arrow 4. According to a further embodiment of the present invention such protrusions may be provided on the wall 46 of the opening 42 of the cartridge receiving section for cooperation with such recesses provided at the lid 50. Besides the protrusions 52 and recesses 48, any known locking means such as a bar, bolt, or crossbar may be provided at the lid or the cartridge receiving section for reliably locking the lid and the cartridge receiving section. According to a further embodiment of the present invention, the lid 50 and cartridge receiving section 40 may be locked by sliding a sleeve over the outer surface of the lid and cartridge receiving section. The single-use dispensing tip 70 comprises a tubular part 72 with a proximal end 74 adapted for receiving the dispensing tube 66 of the cartridge 60, and a distal end 76 having a dispensing orifice 78. Further, it comprises a shielding element 80 having a side 82 facing an oral environment and an opposite side 84 facing away from the oral environment, whereby said shielding element shields against the oral environment during use. In the embodiment shown in Fig. 1 and Fig. 2A the shielding element 80 is provided at the proximal end 74 of the tubular part 72. The length of the tubular part 72 is greater than the length of the terminal section of the dispensing tube 66, which terminal section protrudes beyond the aperture 44 when the cartridge is inserted into the cartridge receiving section. Further, the shielding element 80 is a circular disc collar. It shields the terminal section of the dispensing tube 66 protruding through the aperture 44, when the cartridge 60 is inserted into the cartridge receiving section 40 during use of the high-viscous dental material application system in an oral environment. Preferably, the shielding element 80 is a collar. More preferably, Its proximal surface matches with the opposing surface of the cartridge receiving section 40 of the application ejector device. Thus, creeping of saliva and other body fluids between the collar and the application ejector device during use is advantageously prevented. According to a further embodiment of the present invention, the circular disc collar is flexible. Thus, injury of the tissue surrounding the application site which may be very sensitive may advantageously be avoided. Namely, a flexible collar is deformable under the condition of application. Fig. 2B shows the front view of the cartridge receiving section 40 and lid 50 illustrated in Fig. 2A.

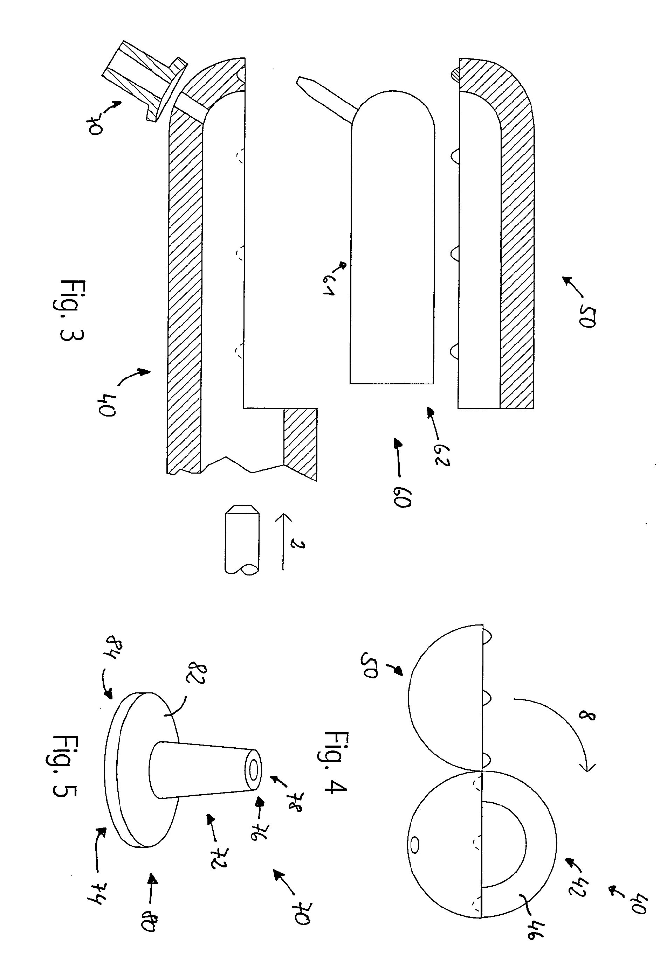

Fig. 3 shows a system according to the invention which comprises essentially the same features as the system illustrated in Fig. 2A and described above. However, the cartridge 60 in Fig. 3 does not comprise the annular exterior flange 65 at the proximal end 62 of the cartridge body 61. The embodiment of the system shown in Fig. 3 without an exterior flange 65 is preferred in case that a lid 50 is foreseen for the system of the present invention. Namely, the design of the cartridge and the inner surface of the cartridge receiving section and the lid are simplified. Moreover, in case that the system of the present invention includes the lid 50, the cartridge receiving section 40 may be closed by the lid, and when lid and cartridge receiving section are locked reliably by a suitable locking means, the cartridge is prevented from becoming loose and from being swallowed by a patient.

Fig. 4 shows the front view of a cartridge receiving section 40 and lid 50 similar to the system illustrated in Fig. 3. However, in the system of Fig. 4, the lid 50 is hinged to the cartridge receiving section 40. For closing the opening 42 in the wall 46 of the cartridge receiving section 40, the lid is moved as indicated by arrow 8. This embodiment has the advantage that the lid cannot be lost during disinfection and treatment of a patient when a cartridge has to be inserted into the cartridge receiving section. Thus, the user cannot drop a disinfected lid when assembling the lid onto the cartridge receiving section. This improves the handling of the system and reduces the time necessary for a chair-side treatment of a patient which is advantageous for the patient and the user of the application system. Moreover, in the embodiment of the application system of the present invention, wherein the lid 50 is hinged to the cartridge receiving section 40, there is no danger that a lid which has not been disinfected together with the application ejector device is used for closing the cartridge receiving section. Hence, a contaminated lid cannot be mixed up with a disinfected lid. Cross-contamination and cross-infections are thus reliably avoided.

Fig. 5 shows a single-use dispensing tip 70 according to the first aspect of the present invention for a multiple-use high-viscous dental material dispensing cartridge insertable into an application ejector device. The tip 70 comprises a tubular part 72 with a proximal end 74 adapted for receiving a dispensing tube of a cartridge, and a distal end 76 having a dispensing orifice 78. Furthermore, the tip 70 comprises a shielding element 80 having a side 82 facing an oral environment and an opposite side 84 facing away from the oral environment, whereby the shielding element shields against the oral environment during use. The shielding element 80 is provided at the proximal end of the tubular part. It is designed as a flexible circular disc collar. This embodiment of a dispensing tip is preferred for the use of a high-viscous dental material application system comprising an application ejector device with a lid.

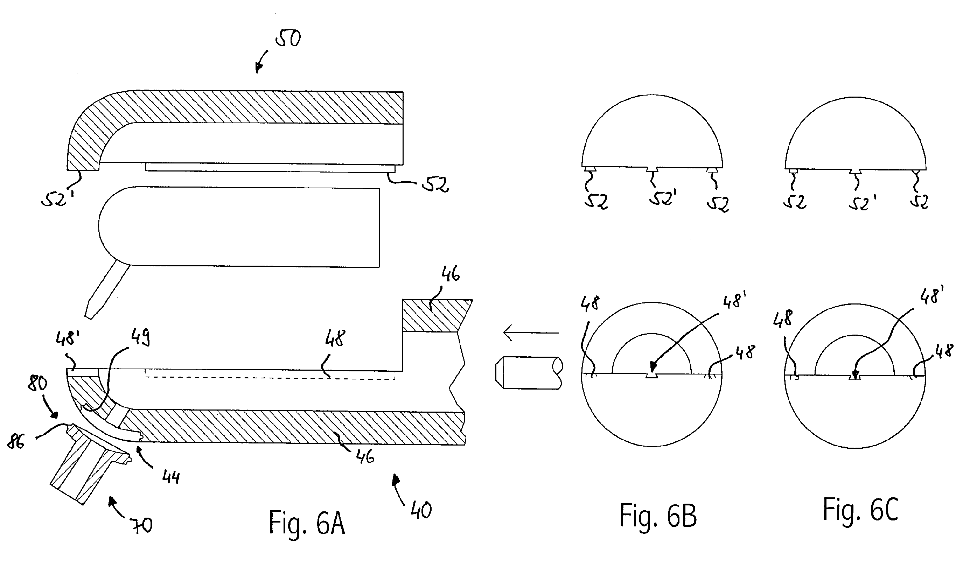

Fig. 6A and 6B show a system according to the invention which comprises essentially the same features as the system illustrated in Fig. 3 and Fig. 4. The embodiment shown Fig. 6A and 6B comprises protrusions 52 which are designed in the form of long elongate lands or ridges 52 and a land or ridge 52', respectively. These protrusions 52 and 52' are adapted for insertion into corresponding recesses shaped in the form of grooves or conduits 48 and 48' provided in the wall 46 of the cartridge receiving section 40. These protrusions and recesses are dovetailed as illustrated in Fig. 6B. These protrusions and recesses may be pressed together for forming a snapping connection. According to a further embodiment of the present invention these protrusions and recesses may be formed such that the lid 50 can be slid onto the cartridge receiving section for closing the opening 42 of the cartridge receiving section 40. As shown in Fig. 6C the protrusions 52 and 52', and the recesses 48 and 48' may be also four-cornered or rounded in a sectional view. Further, the embodiment of the system shown in Fig. 6A comprises a dispensing tip 70 having a collar 80 which is adapted for being received by the aperture 44 in the cartridge receiving section of the application ejector device. The collar 80 has a protrusion 86 designed as an annular ring. This annular ring may be received in a corresponding recess 49 provided as an annular groove in the aperture 44 for forming a snapping connection. According to a further embodiment of the present invention threads may be provided on the collar 80 and in the aperture 44 instead of the protrusion 86 and recess 49. Furthermore, a connection through a bayonet locking may be foreseen between the collar 80 and the aperture 44 for providing a positive lock between the shielding element 70 and the aperture 44 in the cartridge receiving section 40 of the application ejector device. A snapping connection and a bayonet locking are preferred, since these positive locks may be locked and unlocked faster when compared with screwing which is necessary for providing a positive lock between the above elements having threads. Fast locking and unlocking reduces the time necessary for a chair-side treatment. This saves time and is advantageous both for a patient and a user employing the application system of the present invention.

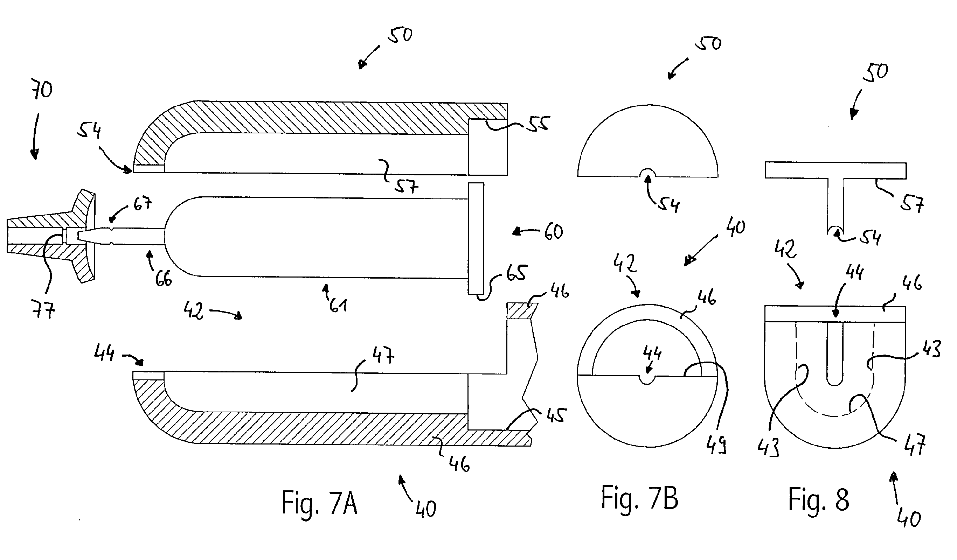

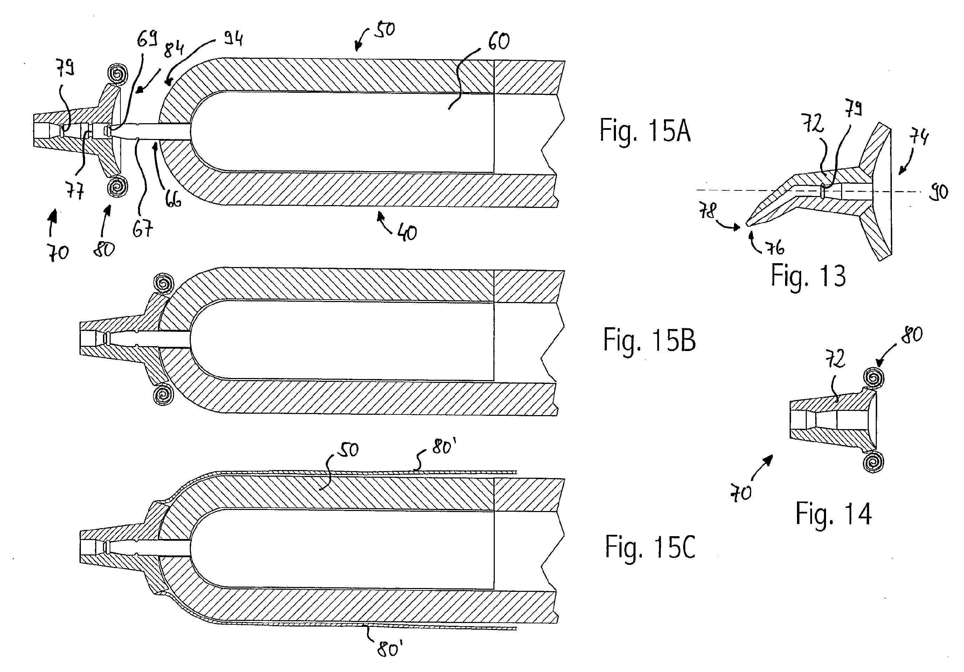

Fig. 7A shows a further embodiment of the application system of the present invention, wherein the aperture 44 in the cartridge receiving section 40 is adapted for receiving a multiple-use high-viscous dental material dispensing cartridge 60 having a dispensing tube 66 which is oriented at an angle of 0° to the longitudinal axis of the cartridge body 61. In this embodiment of the application system, the inner surfaces 47 and 57 of the cartridge receiving section 40 and the lid 50 have the recesses 45 and 55 for accommodating the exterior flange 65 of the cartridge 60. Further, the lid 50 may have the recess or aperture 54 which forms together with the aperture 44 in the cartridge receiving section 40 an opening in the wall of the application ejector device through which the dispensing tube 66 may protrude, when the cartridge 60 is inserted in the cartridge receiving section 40 and the lid 50 is connected to the cartridge receiving section for closing the opening 42. The terminal section of the dispensing tube 66 is tapered for facilitating insertion of the dispensing tube into the proximal end of the tubular part of the dispensing tip 70. A dispensing tip may be press-fit onto the terminal section of the dispensing tube. According to another embodiment of the present invention, the dispensing tip 70 may be connected to the terminal section of the dispensing tube 66 by a positive lock. Such a positive lock may be achieved by corresponding threads provided on the inner surface of the tubular part of the dispensing tip and the outer surface of the terminal section of the dispensing tube 66. According to another embodiment, the positive lock may be achieved by a bayonet locking. Furthermore, such a positive lock may be achieved by a snapping connection. The snapping connection may be provided between a protrusion provided on the inner surface of the tubular part of the dispensing tip 70 and a recess provided on the outer surface of the dispensing tube 66. According to another embodiment of the present invention, a snapping connection may be provided between a recess provided on the inner surface of the tubular part of the dispensing tip 70 and a protrusion provided on the outer surface of the dispensing tube 66. As illustrated in Fig. 7A, the outer surface of the dispensing tube 66 has a recess in the form of an annular groove 67 adapted for a snapping connection with a protrusion in the form of an annular ring 77 provided on the inner surface of the tubular part of the dispensing tip 70. The embodiment of an application system which is adapted for receiving a cartridge having the dispensing tube 66 which is oriented at an angle of 0° to the longitudinal axis of the cartridge body 61 is particularly preferred. Namely, it allows the employment of the single-use dispensing tip illustrated in Fig. 13. The dispensing tip illustrated in Fig. 13 has the advantage, that the tubular part is bent. Hence, the dispensing orifice 78 is offset to the longitudinal axis of the cartridge body 61. Particularly preferred is an embodiment wherein the distal end of the tubular part is oriented at an angle of about 45° to the longitudinal axis through the center of the proximal end of the tubular part. This allows to reach application sites which are problematic in view of their accessibility. The bent tubular part of the dispensing tip 70 may be rigid, in case that it is made of a plastic material such as a molded plastic material. The dispensing tip 70 of Fig. 13 has the further advantage that it may be rotated with regard to the longitudinal axis of the cartridge body 61 and/or the dispensing tube 66, in case that the tip is connected to the dispensing tube through a snapping connection. According to another embodiment of the present invention, the tubular part of a single-use dispensing tip for a multiple-use high-viscous dental material dispensing cartridge is metallic. Then, the tubular part of the dispensing tip 70 has the advantage that it can be bent such that it is oriented at any angle to the longitudinal axis of the cartridge body and/or the dispensing tube 66. Application sites having problematic accessibility can thus be reached and treated easily. The application system as illustrated in Fig. 7A may also comprise a dispensing tip as shown in Fig. 14. Then a lid is not necessary, since the cartridge may be shielded during use against the oral environment through the elastic envelope as shown e.g. in Fig 17B. Fig. 7B depicts the front view of the cartridge receiving section 40 and the lid 50 illustrated in Fig. 7A.

According to a further embodiment of the application system of the present invention, a cartridge receiving section 40 may have the embodiment illustrated in Fig. 8. The cartridge receiving section 40 shown in Fig. 8 is adapted for a cartridge as depicted in Fig. 7A, wherein the multiple-use high-viscous dental material dispensing cartridge 60 has a dispensing tube 66 which is oriented at an angle of 0° to the longitudinal axis of the cartridge body 61. In this case an application system according to the present invention may or may not comprise the lid 50 shown in Fig. 8. The lid 50 shown in Fig. 8 is complementary in shape to the opening 42 in the wall 46 of the cartridge receiving section 40. However, it is not complementary in shape to the outer shape of a cartridge having an essentially tubular cartridge body. According to a particular preferred embodiment of the present invention, the inner surface 57 of the lid 50 is complementary to the outer surface of a cartridge. In case that a system does not comprise the lid 50, advantageously a dispensing tip as illustrated in Fig. 14 and 17A and 17B may be used. The cartridge receiving section shown in Fig. 8 has an inner surface adapted for receiving a cartridge having an essentially tubular cartridge body 61. Preferably, protrusions 43 are provided on the inner surface of the cartridge receiving section 40. The protrusions 43 enable a snapping connection or snapping locking of such a cartridge body 61 in the cartridge receiving section 40. Thus, a firm seat and lock may be provided between the cartridge and the cartridge receiving section. Advantageously, such firm seat or lock may be achieved very fast which reduces the time of using the application system of the present invention.

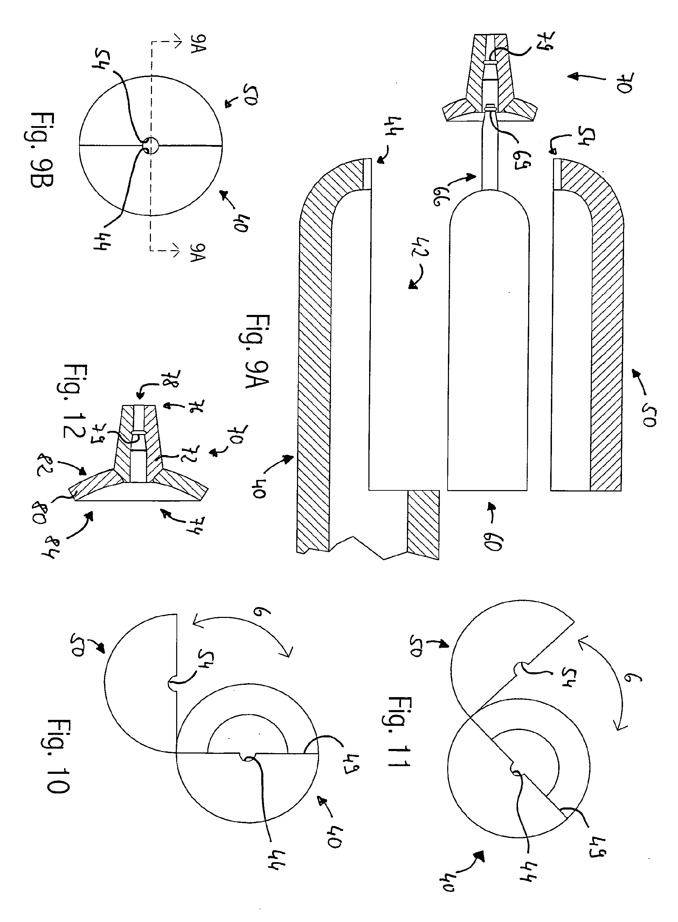

Fig. 9A and 9B show a further preferred embodiment of the application system of the present invention, wherein the cartridge receiving section 40 does not comprise the opening 42 at the upper side of the wall 46, as illustrated e.g. in Fig 7A, but on its right hand side when viewed from the user. Fig. 9A shows a horizontal sectional top view of the cartridge receiving section 40 and the lid 50 as indicated by the broken line 9A-9A in Fig. 9B. Thus, the cartridge receiving section 40 is on the right hand side in Fig. 9B, and the lid 50 is on the left hand side in Fig. 9B. The apertures 44 and 54 in the cartridge receiving section 40 and the lid 50, respectively, provide an opening through which the dispensing tube 66 of a cartridge 60 may protrude. The terminal section of the dispensing tube 66 is tapered. This tapering facilitates insertion of the dispensing tube 66 into the tubular part of the dispensing tip 70. The tubular part of the dispensing tip 70 has also a tapering corresponding to the tapering of the dispensing tube 66. Further, the outer surface of the dispensing tube 66 has a protrusion in the form of an annular ring 69 adapted for a snapping connection with a recess in the form of an annular groove 79 provided on the inner surface of the tubular part of the dispensing tip 70. According to a further embodiment of the present invention, the outer surface of the dispensing tube 66 has a protrusion, preferably in the form of an annular ring 69, adapted for a snapping connection with a recess, preferably in the form of an annular groove 79, provided on the inner surface of the tubular part of the dispensing tip 70, and the outer surface of the dispensing tube 66 has a recess, preferably in the form of an annular groove, adapted for a snapping connection with a protrusion, preferably in the form of an annular ring, provided on the inner surface of the tubular part of the dispensing tip 70 as shown in Fig. 15A-C. Thus, reliability of the snapping connection between the dispensing tip and the dispensing tube may be increased. Particularly preferred is an embodiment, wherein the protrusion on the outer surface of the dispensing tube is provided at a tapered portion of the dispensing tube, and wherein the recess on the outer surface of the dispensing tube is provided at a not tapered portion of the dispensing tube. Thus, the protrusion on the inner surface of the tubular part of the dispensing tip and the protrusion on the outer surface of the dispensing tube do not interfere when inserting the dispensing tube into the dispensing tip. In Fig. 9A the lid 50 has no protrusions which may cooperate with corresponding recesses in the cartridge receiving section 40 for connecting and/or guiding the lid 50 onto the opening 42 of the cartridge receiving section 40. The lid and the cartridge receiving section may be locked by means of any known locking means such as a bar, bolt, or crossbar. Such locking means may be provided at the lid or the cartridge receiving section for reliably locking the lid and the cartridge receiving section. According to a further embodiment of the present invention, the lid 50 and cartridge receiving section 40 may be locked by sliding a sleeve over the outer surface of the lid and cartridge receiving section. According to a further embodiment of the present invention, the lid or the cartridge receiving section may comprise protrusions and recesses (52, 52', 48, and 48') described and illustrated with regard to Fig. 2A, 2B, 3, and 4.

Particularly preferred is the embodiment of Fig. 9A and 9B, wherein the lid 50 is hinged to the cartridge receiving section 40, illustrated in Fig. 10. The lid 50 may be closed and opened when moved as indicated by arrow 6. More preferred than the embodiment of Fig. 10 is the embodiment wherein the edge 49 of the cartridge receiving section 40 is not vertical but horizontal as shown in Fig. 7B or inclined with regard to the vertical as shown in Fig. 11. The latter two embodiments have the advantage that the cartridge may not be dropped so easily as it is possible according to the embodiment illustrated in Fig. 9A and 9B.

According to a further embodiment of the present invention, the cartridge receiving section is connected to the application ejector device such that the cartridge receiving section can be rotated with regard to the longitudinal axis of the movable plunger of the application ejector device. This embodiment is particularly preferred in case that the cartridge receiving section is adapted for receiving a multiple-use high-viscous dental material dispensing cartridge 60 having a dispensing tube 66 which is oriented at an angle other than 0° to the longitudinal axis of the cartridge body 61. Then, application sites which are problematic in view of accessibility can be reached easily by this embodiment of the application system of the present invention.

Fig. 12 shows a single-use dispensing tip 70 according to the first aspect of the present invention. It is adapted for the use with a multiple-use high-viscous dental material dispensing cartridge insertable into an application ejector device 10. The dispensing tip 70 comprises a tubular part 72 with a proximal end 74 adapted for receiving a dispensing tube of a a multiple-use high-viscous dental material dispensing cartridge. Further, the tubular part 72 has a distal end 76 having a dispensing orifice 78. Further, the dispensing tip 70 comprises a shielding element 80 having a side 82 facing an oral environment and an opposite side 84 facing away from the oral environment. The shielding element 80 shields against the oral environment during use. The tubular part 72 comprises on its inner surface an annular groove 79 adapted for a snapping connection with a corresponding annular ring 69 (Fig. 9A) provided on the dispensing tube 66 of a dispensing cartridge 60. Furthermore, the inner surface of the tubular part 72 is tapered. The tapering corresponds to the tapering of the dispensing tube (Fig. 9A). Thus, the inner diameter of the dispensing orifice 78 is smaller than the inner diameter of the tubular part at the proximal end 74. This embodiment (Fig. 9A, 12, and 13) is preferred when compared to an embodiment of the present invention, wherein the inner diameter of the dispensing orifice 78 has the same diameter as the tubular part on its proximal end (Fig. 2A, 3, 6A, 7A, 14, 15A-C, and 17).

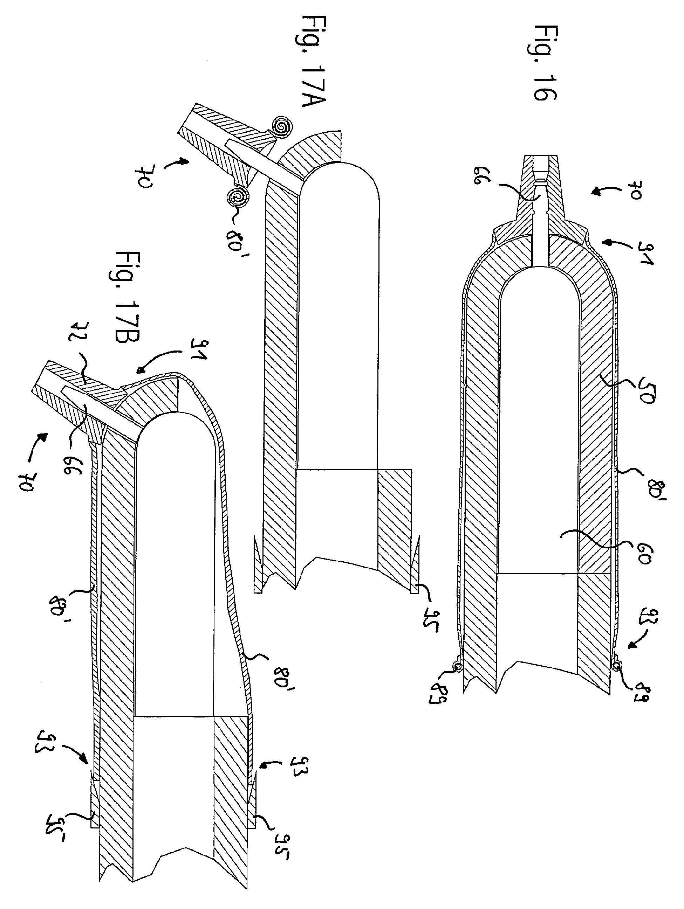

Fig. 13 shows a further embodiment of a single-use dispensing tip 70 for a multiple-use high-viscous dental material dispensing cartridge. The tubular part 72 is bent. Hence, the dispensing orifice 78 is offset to the axis 90 through the center of the proximal end 74 of the tubular part 72. Particularly preferred is an embodiment wherein the distal end 76 of the tubular part is oriented at an angle of about 45° to the axis 90. This allows to reach application sites which are problematic in view of their accessibility. The bent tubular part of the dispensing tip 70 may be rigid, in case that it is made of a plastic material, such as a molded thermoplastic material. The dispensing tip 70 of Fig. 13 has the further advantage that it may be rotated with regard to the longitudinal axis of a cartridge body and/or a dispensing tube 66, in case that the tip 70 is connected to the dispensing tube through a snapping connection. The dispensing tip 70 of Fig. 13 has e.g. the annular groove 79 which is suited for a snapping connection with a corresponding protrusion such as the annular ring on the dispensing tube of the cartridge shown in Fig. 15A or Fig. 16.

Fig. 14 shows a further embodiment of the single-use dispensing tip 70 according to the first aspect of the present invention. The dispensing tip 70 has a shielding element 80 which is an elastic envelope. This elastic envelope is provided at the proximal end of the tubular part 72. The elastic envelope is a flexible tubular sheath with a first and second end, whereby said first end is connected to the tubular part. It is rolled up in Fig. 14. This embodiment has the advantage that the dispensing tip may be mounted fast and easily onto a dispensing tube of a cartridge.

Fig. 15A-C show a further embodiment of the application system of the present invention. The outer surface of the dispensing tube 66 has an annular ring 69 adapted for a snapping connection with an annular groove 79 provided on the inner surface of the tubular part of the dispensing tip 70. Moreover, the outer surface of the dispensing tube 66 has an annular groove 67 adapted for a snapping connection with an annular ring 77 provided on the inner surface of the tubular part of the dispensing tip 70. Thus, reliability of a snapping connection between the dispensing tip and the dispensing tube may be increased. Particularly preferred is an embodiment, wherein the annular ring 69 is provided at a tapered portion of the dispensing tube 66 and wherein the groove 67 is provided at a not tapered portion of the dispensing tube 66. Thus, the annular ring 69 and the annular ring 77 do not interfere when the dispensing tube is inserted into the dispensing tip 70. The shielding element 80 of the dispensing tip has a collar with a proximal surface 84 matching with the opposing surface 94 of said application ejector device. This embodiment has the advantage that saliva or other body fluids present in the oral environment of a patient during dental treatment are prevented from creeping into a space between the dispensing tip mounted on the dispensing tube of the cartridge 60 received in the cartridge receiving section 40 of an application ejector device 10. The shielding element 80 comprises further an elastic envelope. This elastic envelope is a flexible tubular sheath 80' with a first and second end, whereby said first end is connected to the collar. It is rolled up in Fig. 15A and 15B. This embodiment has the advantage that the dispensing tip 70 may be mounted fast and easily onto the dispensing tube 66 of the cartridge 60. Further, in Fig. 15C can be seen that the flexible tubular sheath is rolled down over the lid 50 and the cartridge receiving section 40 of a high-viscous dental material application system according to the third aspect of the present invention.

Fig. 16 shows a further embodiment of a single-use dispensing tip 70 for a multiple-use high-viscous dental material dispensing cartridge 60 inserted into an application ejector device. The dispensing tip 70 comprises a shielding element which comprises an elastic envelope which is a flexible tubular sheath 80' with a first 91 and second end 93. The first end 91 is connected to the tubular part 72 of the dispensing tip 70. The second end 93 can be tightened. Such tightening may be achieved e.g. by a cord or ribbon. In Fig. 16 the tubular sheath 80' comprises the cord 89 at its second end 93.

Fig. 17A and 17B show a further embodiment of a single-use dispensing tip 70 for a multiple-use high-viscous dental material dispensing cartridge 60 inserted into an application ejector device. The dispensing tip 70 comprises a shielding element comprising an elastic envelope which is a flexible tubular sheath 80' which is rolled up. Such a dispensing tip 70 is suitable for an application system of the present invention with and without a lid 50 for the cartridge receiving section 40 of an application ejector device. Moreover, such a dispensing tip 70 is suitable for an application system adapted for receiving a multiple-use high-viscous dental material dispensing cartridge 60 having a dispensing tube 66 which is oriented at an angle of 0° (Fig. 16) or other than 0° to the longitudinal axis of the cartridge body (Fig. 17A and 17B). As shown in Fig. 17B the flexible tubular sheath 80' is rolled down. It covers the cartridge 60. The second end 93 of the flexible tubular sheath 80' is tightened by a sleeve 95. The sleeve 95 is provided at the application ejector device. In Fig. 17B the sleeve 95 is slid onto the second end of the flexible tubular sheath 80' for tightening the second end 93. The first end 91 of the flexible tubular sheath is connected to the tubular part 72 of the dispensing tip 70.

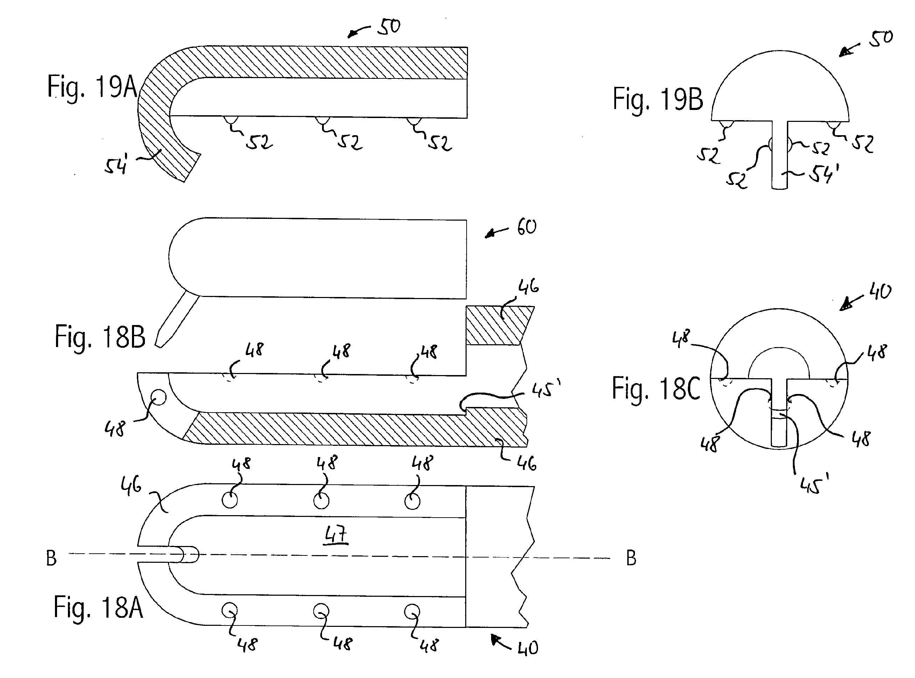

Fig. 18A -18C show a further embodiment of a cartridge receiving section 40 of the application system of the present invention. The aperture 44 in the wall 46 of the cartridge receiving section is formed as a slit. This embodiment facilitate easy and fast insertion of a multiple-use high-viscous dental material dispensing cartridge 60 into an application ejector device. Fig. 18B shows a sectional view of the cartridge receiving section 40 as indicated by the line B-B in Fig. 18A. The inner surface of the cartridge receiving section is complementary in shape to the outer shape of the cartridge 60. It comprises a protrusion 45' against which the cartridge abuts upon insertion. The wall 46 of the cartridge receiving section comprises recesses 48 having a hemispherical shape for cooperation with corresponding protrusions 52 provided at the lid 50, as shown in Fig. 19A and 19B. These protrusions 52 and recesses 48 may form a snapping connection and/or may serve as guiding means. According to another embodiment of the present invention, such protrusions are provided on the cartridge receiving section for cooperation with corresponding recesses provided at the lid 50. Fig. 18C shows the front view of the cartridge receiving section 40 of Fig. 18B. Fig 19B shows the front view of the lid 50 illustrated in Fig. 19A. The lid 50 comprises a nose 54' adapted to be inserted into the aperture 44 of the cartridge receiving section. The nose 54' and the aperture 44 comprise also protrusions 52 and 48 as described above. They may form a snapping connection and/or may serve as guiding means as described above.

The embodiment exemplified in Fig. 18A-C and Fig. 19A-B may be used with any one of the dispensing tips described above. If necessary, the corresponding protrusions and recesses on the dispensing tube of the cartridge and the dispensing tips may be provided.

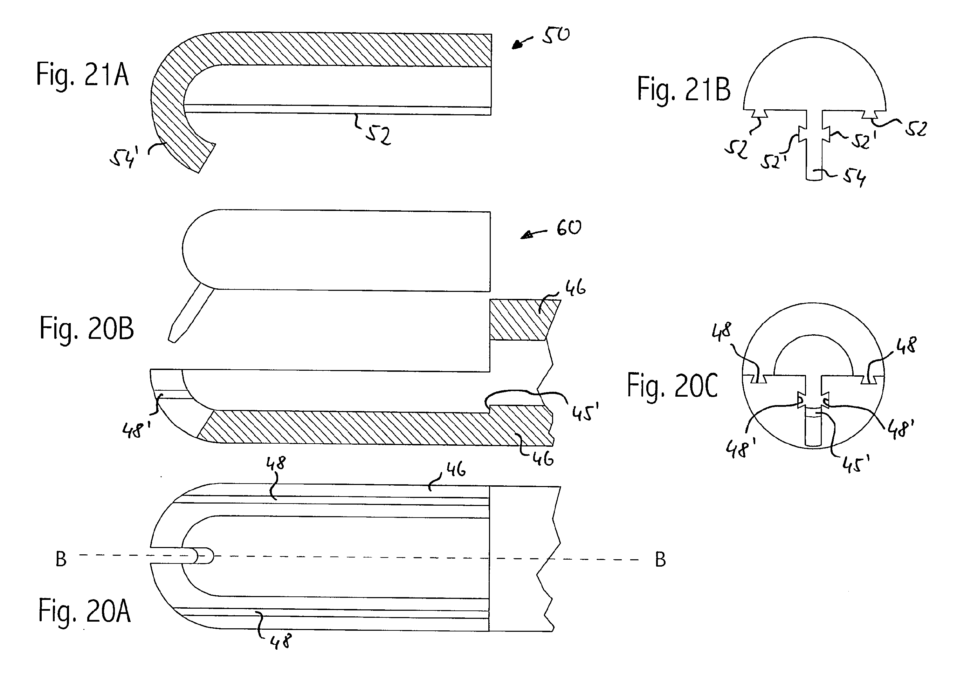

Fig. 20A-C and Fig. 21A-B show an embodiment of the present invention similar to that of Fig. 18A-C and Fig. 19A-B. By contrast to the embodiment shown in Fig. 18A-C and Fig. 19A-B, the lid 50 shown in Fig. 21A-B comprises protrusions 52 which are designed in the form of long elongate lands or ridges 52 and a land or ridge 52', respectively. These protrusions 52 and 52' are adapted for insertion into corresponding recesses shaped in the form of grooves or conduits 48 and 48' provided in the wall 46 of the cartridge receiving section 40. These protrusions and recesses are dovetailed as illustrated in Fig. 20C and 21 B. These protrusions and recesses are formed such that the lid 50 can be slid onto the cartridge receiving section for closing the opening 42 of the cartridge receiving section 40. According to a further embodiment of the present invention these protrusions and recesses may be pressed together for forming a snapping connection. According to another embodiment of the present invention, the lands or ridges 52 and/or 52 may comprise further protrusions and/or recesses which may cooperate with corresponding recesses and/or protrusions provided in the grooves or conduits 48 and 48'. Thus, the lid 50 may be connected to the cartridge receiving section 40 by a combination of sliding the lid onto the cartridge receiving section and locking it by a snapping connection. As shown in Fig. 6C the protrusions 52 and 52', and the recesses 48 and 48' may be also four-cornered or rounded in a sectional view (not shown in Fig. 20C and 21B).

Fig. 22A shows an embodiment of a single-use dispensing tip 170 according to the second aspect of the present invention for a multiple-use high-viscous dental material dispensing cartridge 160 insertable into an application ejector device. The single-use dispensing tip 170 comprises a tubular part 172 with a proximal end 174 adapted for insertion into an opening 166 in the multiple-use high-viscous dental material dispensing cartridge 160. Furthermore, the tubular part 172 has a distal end 176 having a dispensing orifice 178. Further, the dispensing tip 170 comprises a shielding element having a side 82 facing an oral environment and an opposite side 84 facing away from the oral environment, whereby the shielding element 80 shields against the oral environment during use. The shielding element 80 is provided at the proximal end 174 of the tubular part 174. It is a circular disc collar. Preferably, it is flexible, such that injuries of sensitive tissue in the oral environment are avoided. According to another embodiment of the present invention, the shielding element 80 comprises an elastic envelope. Preferably, such elastic envelope is a flexible tubular sheath with a first and second end, whereby said first end is connected to the tubular part 172. More preferably, the second end can be tightened, preferably by a cord or ribbon. Particularly preferred is an embodiment, whereby the elastic envelope is folded up or rolled up prior to use. According to a further embodiment of the present invention, the tubular part 172 can be bent for accommodating the oral situation.

Furthermore, Fig. 22A shows an embodiment of a high-viscous dental material application system according to the fourth aspect of the present invention. The high-viscous dental material application system comprises an application ejector device comprising the cartridge receiving section 140 having an opening 142 and an aperture 144 in its wall 146. The aperture 144 in the cartridge receiving section 140 is adapted for receiving a multiple-use high-viscous dental material dispensing cartridge 160 having a cartridge opening 166 which is oriented at an angle of about 45° to the longitudinal axis of the cartridge body 161. The inner surface 147 of the cartridge receiving section and the inner surface 157 of the lid 150 are preferably complementary in shape to the outer surface of the cartridge body 161. The inner surface of the cartridge receiving section has the protrusion 145' against which the cartridge 160 abuts upon insertion. Further, the application ejector device comprises a movable plunger (not shown) and corresponds essentially to the embodiment of an application ejector device shown and described with regard to Fig. 1. Further, the application system comprises the multiple-use high-viscous dental material cartridge 160 for insertion into said cartridge receiving section 140 through said opening 142. The cartridge 160 has a cartridge body 161 with a proximal end 162 and a distal end 164. The cartridge body 161 contains an amount of high-viscous dental material sufficient for application to more than one patient. Moreover, the cartridge 160 has the cartridge opening 166 at the distal end 164. According to the present invention, the cartridge opening 166 may be offset at an angle of 0 to 90° to the longitudinal axis of the cartridge body 161. The cartridge opening 166 is adapted for alternately receiving the plug 174' or the proximal end 174 of the tubular part 172 of the single-use dispensing tip 170. Furthermore, the cartridge comprises the movable piston 63 adapted to be moved by the movable plunger of the application ejector device for dispensing dental material out of the cartridge opening after removal of the plug 174' and insertion of the dispensing tip 174 into the opening 166. The shielding element 80 of the dispensing tip 170 is a collar with the proximal surface 182 which does not match with the opposing surface of the application ejector device. However, according to a preferred embodiment of the present invention, the proximal surface 182 matches with the opposing surface of the application ejector device. Furthermore, the collar may be adapted for being received by the aperture 144 in the application ejector device, as illustrated in Fig. 6A. Particularly preferred is an embodiment wherein the tubular part 172 and/or the collar of the dispensing tip 174 is adapted for engagement with the aperture 144 in the application ejector device with a positive lock. As shown in Fig. 22A, the proximal end 174 of the tubular part 172 of the dispensing tip 170 is adapted for engagement with the cartridge opening 166 with a positive lock. The positive lock may be achieved by the thread 177 corresponding to the thread 167 in the cartridge opening 166. Further, the plug 174' has a thread corresponding to the thread 167 in the cartridge opening 166. According to a further embodiment of the present invention, the proximal end 174 of the tubular part 172 of the dispensing tip 170 may be adapted for engagement with the aperture 144 in the application ejector device with a positive lock. According to the present invention, a positive lock may be achieved by a thread or threads, a bayonet locking, or a snapping connection. According to a not shown embodiment of the present invention, the proximal end 174 of the tubular part 172 of the dispensing tip 170 is adapted for engagement with the cartridge opening 166 and with the aperture 144 in the application ejector device with a positive lock, e.g. a thread (such as 177) provided at the proximal end of the tubular part which thread engages with corresponding threads provided in the cartridge opening (167) and in the aperture 144. Particularly preferred is a snapping connection and a bayonet locking, since these means are faster to lock or unlock when compared to a thread system whereby screwing is necessary. According to a further preferred embodiment of the present invention, the contact surfaces between the tubular part 172 and/or shielding element 80 with the application ejector device and/or cartridge 160 are adapted for a snug fit or fitting. The size of the multiple-use cartridge is preferably sufficient such that the cartridge body 161 may have an information carrying surface layer. According to a further preferred embodiment of the present invention, the plug 174' may be color coded. Preferably, a color coded plug is a single-use plug. The colors of the single-use or multiple-use plugs may advantageously indicate whether the multiple-use high-viscous dental material cartridge is new and/or which or how many patients have been treated with the multiple-use high-viscous dental material cartridge. This color coding is particularly preferred, in case that the dental material is sensitive to light. Namely, in this case the multiple-use high-viscous dental material cartridge cannot comprise a window through which a user can see which amount of dental material is still in the cartridge. As can be seen in Fig. 22A, the application system may comprise an application ejector device including the lid 150 for closing the opening 142 of the cartridge receiving section 140. The lid 150 and the cartridge receiving section 140 may comprise any one of the protrusions (52, 52') and recesses (48, 48') described with regard to Fig. 2, 6A, 18A-C, 19A-B, 20A-C, and 21A-B. Thus, the lid 150 may be connected to said application ejector device by a snapping connection. Furthermore, the lid 150 and/or the cartridge receiving section 140 may comprise any known locking means such as a bar, bolt, or crossbar. Such locking means may be provided at the lid or the cartridge receiving section for reliably locking the lid and the cartridge receiving section. According to a further embodiment of the present invention, the lid 150 and the cartridge receiving section 140 may be locked by sliding a sleeve over the outer surface of the lid 150 and the cartridge receiving section 140. In case that the dispensing tip comprises an elastic envelope the lid 150 is not necessary. Then the cartridge body 161 may be shielded by the elastic envelope as shown e.g. in Fig. 17B. According to another embodiment of the present invention, the lid 150 is hinged to the cartridge receiving section, as it is shown e.g. in Fig. 4, 10, and 11. According to another embodiment of the present invention, the lid 150 can be slid to the cartridge receiving section 140. According to a particularly improved embodiment of the present invention, the cartridge receiving section 140 is connected to the application ejector device such that the cartridge receiving section 140 can be rotated with regard to the longitudinal axis of the cartridge inserted into the cartridge receiving section. Fig. 22B shows the front view of the lid 150 and the cartridge receiving section 140 of Fig. 22A.

Fig. 23A shows a further embodiment of a cartridge receiving section 140 of the application system according to the fourth aspect of the present invention. The aperture 144 in the cartridge receiving section 140 is adapted for receiving a multiple-use high-viscous dental material dispensing cartridge 160 having a cartridge opening 166 which is oriented at an angle of 0° to the longitudinal axis of the cartridge body 161. The cartridge opening has a recess 169 adapted for receiving a corresponding protrusion 179 of the proximal end of the dispensing tip 170. Further, the wall of the cartridge 161 has an increased thickness at the distal end 164 such that the protrusion 169 or a thread may be formed therein as shown in Fig. 22A. Thus, reliable opening and closing of the cartridge opening 166 may be achieved. Such reliability is important since the multiple-use cartridge 160 is adapted for containing an amount of dental material sufficient for application to more than one patient. The application system employing the cartridge receiving section shown in Fig. 23A-B may or may not comprise a lid. In case that the dispensing tip 170 as shown in Fig. 23A is used no lid is necessary, since the dispensing tip 170 has a shielding element 180 adapted for closing the opening 142 in the wall of the cartridge receiving section 140. The shielding element 180 shown in Fig. 23A is complementary in shape to the opening 142 in the wall 146 of the cartridge receiving section 140. The shielding element 80,180 of the dispensing tip 170 has a side 82, 182 facing an oral environment and an opposite side 84, 184 facing away from the oral environment, whereby the opposite side 84, 184 matches with the opposing surface of said application ejector device. However, the opposite side 184 is not complementary in shape to the outer shape of the cartridge 160 having an essentially tubular cartridge body. According to a particular preferred embodiment of the present invention, the inner surface of the shielding element 180 is complementary to the outer surface of a cartridge. In case that a system does not comprise a lid, advantageously such a dispensing tip 170 or a dispensing tip comprising an elastic envelope may be used. The cartridge receiving section shown in Fig. 23A has an inner surface adapted for receiving a cartridge having an essentially tubular cartridge body 161. Preferably, protrusions 143 are provided on the inner surface 147 of the cartridge receiving section 140. The protrusions 143 enable a snapping connection or snapping locking of such a cartridge body 161 in the cartridge receiving section 140. Thus, a firm seat and lock may be provided between the cartridge and the cartridge receiving section. Advantageously, such firm seat or lock may be achieved very fast, which reduces the time of using the application system of the present invention.

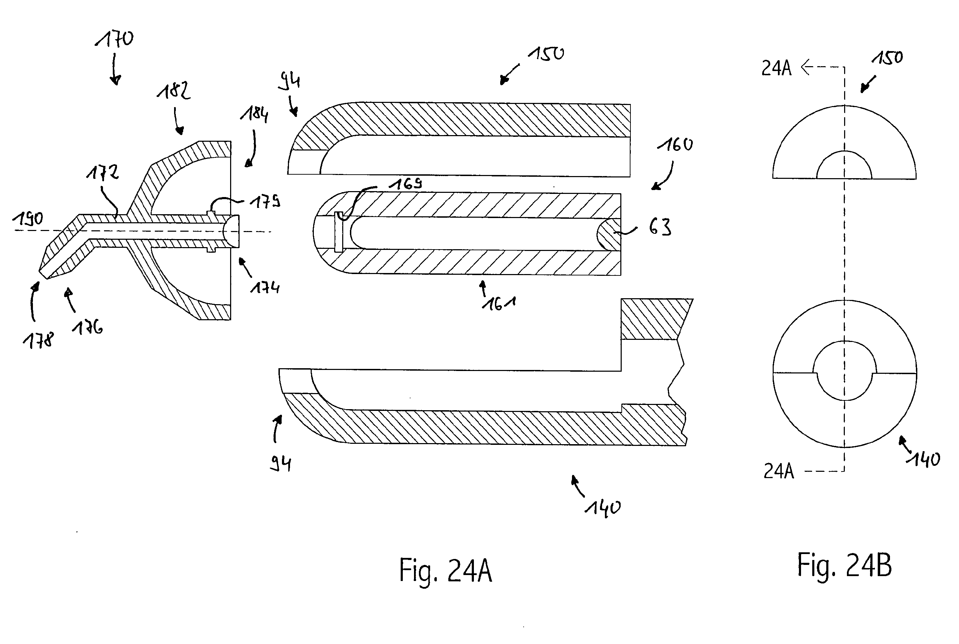

Fig. 24A shows a further embodiment of a single-use dispensing tip 170 for a multiple-use high-viscous dental material dispensing cartridge. The tubular part 172 is bent. Hence, the dispensing orifice 178 and the distal end 176 of the tubular part 172 are offset to the axis 190 through the center of the proximal end 174 of the tubular part 172. Particularly preferred is an embodiment wherein the distal end 176 of the tubular part is oriented at an angle of about 45° to the axis 190. This allows to reach application sites which are problematic in view of their accessibility. The bent tubular part 172 of the dispensing tip 170 may be rigid. Preferably, it is made of a plastic material, such as a molded thermoplastic material. The dispensing tip 170 of Fig. 24A has the further advantage that it may be rotated with regard to the longitudinal axis of the cartridge body 161, in case that the tip 170 is connected to the dispensing tube through a snapping connection. The dispensing tip 170 of Fig. 24A has e.g. the annular ring 179 suited for a snapping connection with a corresponding recess such as the annular groove 169 in the cartridge opening 166 of the cartridge 160. The shielding element 180 of the dispensing tip 170 has a side 182 facing an oral environment and an opposite side 184 facing away from the oral environment, whereby the opposite side 184 matches with the opposing surface 94 of said application ejector device. Fig. 24B shows the front view of the lid 150 and the cartridge receiving section 140 of Fig. 24A.

The high-viscous dental material application system of the third aspect of the present invention may be used as follows. A multiple-use high-viscous dental material dispensing cartridge containing an amount of high-viscous dental material sufficient for application to more than one patient is opened. The cartridge has a cartridge body with a proximal end and a distal end. Further, the cartridge has a dispensing tube at the distal end. A cap which closes the dispensing tube during storage is removed. The cap may be a single-use cap which may be disposed after use, or it may be a multiple-use cap. Preferably, it is a single-use cap. The single-use caps may be color-coded. The color code indicates advantageously whether a cartridge is new, or how often a cartridge had been used, in order to indicate how much material is still in the cartridge. After removal of the cap, the cartridge is inserted into a cartridge receiving section of an application ejector device. The cartridge receiving section has an opening and an aperture in its wall. The cartridge body is inserted through the opening of the cartridge receiving section such that the dispensing tube is inserted through the aperture in the wall of said cartridge receiving section. Further the cartridge is inserted into the cartridge receiving section, such that the dispensing tube protrudes with a terminal section beyond the aperture. Then a lid may be put onto the opening of the cartridge receiving section. After that, the terminal section of the dispensing tube is inserted into a single-use dispensing tip - according to the first aspect of the present invention - for the multiple-use high-viscous dental material dispensing cartridge. The single-use dispensing tip comprises a tubular part with a proximal end. This proximal end is adapted for receiving the dispensing tube. Further, the dispensing tip comprises a shielding element having a side facing an oral environment and an opposite side facing away from the oral environment. Preferably, the shielding element is provided at the proximal end of the tubular part. The shielding element may be a circular disc collar, preferably a flexible circular disc collar (e.g. Fig. 5, Fig. 13). According to a further preferred embodiment of the present invention, the shielding element comprises an elastic envelope (e.g. Fig. 14). More preferably, the elastic envelope is a flexible tubular sheath with a first and second end, whereby said first end is connected to the tubular part. Particularly, the second end may be tightened, preferably by a cord or ribbon. Most preferred, the elastic envelope is folded up or rolled up prior to use. In case that the shielding element may cover the opening of the cartridge receiving section a lid is not necessary (e.g. Fig. 17B). However, according to a particularly preferred embodiment of the present invention, a lid is used for closing the opening of the cartridge receiving section and the shielding element may cover also the lid (e.g. Fig. 15C). According to all embodiments of the application system according to the third aspect of the present invention, the shielding element shields against the oral environment during use. Namely, after insertion of the cartridge into the cartridge receiving section, optionally after closing the opening of the cartridge receiving section with the lid, and after inserting the terminal section of the dispensing tube into the single-use dispensing tip, optionally after rolling the rolled up elastic envelope down, the cartridge cannot be contacted by the hands of the user. For applying the high-viscous dental material to an application site, preferably a tooth cavity, a movable piston which closes the proximal end of the cartridge body is moved by a movable plunger of the application ejector device. The movable plunger is operated by the user for dispensing the dental material out of said dispensing tube, through the tubular part of the dispensing tip through a dispensing orifice provided at the distal end of the tubular part of the dispensing tip directly onto the application site. However, during application of the high-viscous dental material to the application site, the cartridge cannot be touched by the user. Further, saliva or other body fluids cannot spurt onto the cartridge. Further, saliva or any other body fluid which may wet a finger of the user during application are prevented from contacting.the cartridge during use, since the finger of the user cannot contact the cartridge. After application of the dental material to the application site, the multiple-use cartridge is removed from the application ejector device in a clean environment by an operator which is not contaminated by saliva or other body fluids of the patient or by the user after having disinfected the fingers or having removed contaminated gloves. Then, the dispensing tube of the multiple-use cartridge is closed again by a cap, preferably a new single-use cap, more preferably, by a color-coded single-use cap for indicating that the cartridge has been used already. The application ejector device is subjected to autoclave treatment for thorough disinfection before employing it in a treatment of a further patient.

The high-viscous dental material application system of the fourth aspect of the present invention may be used as follows. A multiple-use high-viscous dental material dispensing cartridge containing an amount of high-viscous dental material sufficient for application to more than one patient is opened. The cartridge has a cartridge body with a proximal end and a distal end. Further, the cartridge has a cartridge opening at the distal end. For opening the cartridge, a plug which closes the cartridge opening during storage is removed. The plug may be a single-use plug which may be disposed after use, or it may be a multiple-use plug. Preferably, it is a single-use plug. The single-use plugs may be color-coded. The color code indicates advantageously whether a cartridge is new, or how often a cartridge had been used, in order to indicate how much material is still in the cartridge. After removal of the plug, the cartridge is inserted into a cartridge receiving section of an application ejector device. The cartridge receiving section has an opening and an aperture in its wall. The cartridge body is inserted through the opening of the cartridge receiving section such that the cartridge opening is placed correspondingly to the aperture in the wall of said cartridge receiving section. Then a lid may be put onto the opening of the cartridge receiving section. After that, the proximal end of a tubular part of a single-use dispensing tip according to the second aspect of the present invention is inserted through the aperture in the wall of the cartridge receiving section into the cartridge opening. The single-use dispensing tip comprises the tubular part with the proximal end. This proximal end is adapted for being inserted through the aperture in the wall of the cartridge receiving section and into the cartridge opening. Further, the dispensing tip comprises a shielding element having a side facing an oral environment and an opposite side facing away from the oral environment. Preferably, the shielding element is provided at the proximal end of the tubular part. The shielding element may be a circular disc collar, preferably a flexible circular disc collar (e.g. Fig. 22A). According to a further preferred embodiment of the present invention, the shielding element comprises an elastic envelope. More preferably, the elastic envelope is a flexible tubular sheath with a first and second end, whereby said first end is connected to the tubular part. Particularly, the second end may be tightened, preferably by a cord or ribbon. Most preferred, the elastic envelope is folded up or rolled up prior to use. In case that the shielding element may cover the opening of the cartridge receiving section a lid is not necessary (e.g. Fig. 23A). However, according to a particularly preferred embodiment of the present invention, a lid is used for closing the opening of the cartridge receiving section and the shielding element may cover also the lid (e.g. Fig. 24A). According to all embodiments of the fourth aspect of the present invention, the shielding element shields against the oral environment during use. Namely, after insertion of the cartridge into the cartridge receiving section, optionally after closing the opening of the cartridge receiving section with the lid, and after inserting the proximal end of the dispensing tip into the cartridge opening, optionally after rolling the rolled up elastic envelope down, the cartridge cannot be contacted by the hands of the user. For applying the high-viscous dental material to an application site, preferably a tooth cavity, a movable piston which closes the proximal end of the cartridge body is moved by a movable plunger of the application ejector device. The movable plunger is operated by the user for dispensing the dental material out of said cartridge opening, through the tubular part of the dispensing tip through a dispensing orifice provided at the distal end of the tubular part of the dispensing tip directly onto the application site. However, during application of the high-viscous dental material to the application site, the cartridge cannot be touched by the user. Further, saliva or other body fluids cannot spurt onto the cartridge. Further, saliva or any other body fluid which may wet a finger of the user during application are prevented from contacting the cartridge during use, since the finger of the user cannot contact the cartridge. After application of the dental material to the application site, the multiple-use cartridge is removed from the application ejector device in a clean environment by an operator which is not contaminated by saliva or other body fluids of the patient or by the user after having disinfected the fingers or having removed contaminated gloves. Then, the cartridge opening of the multiple-use cartridge is closed again by a plug, preferably a new single-use plug, more preferably, by a color-coded single-use plug for indicating that the cartridge has been used already. The application ejector device is subjected to autoclave treatment for thorough disinfection before employing it in a treatment of a further patient.

As described above, the single-use dispensing tips for a multiple-use high-viscous dental material dispensing cartridge and the high-viscous dental material application systems comprising such dispensing tips allow the employment of large multiple-use high-viscous dental material dispensing cartridges containing an amount of dental material which is sufficient for application to more than one patient. Thus, the dental material is used more effectively than in single-use cartridges. Namely, the amount of dental material which is wasted is remarkably reduced. Further, the amount of packaging material is reduced. Moreover, cross-contamination and cross-infections of patients treated with such multiple-use cartridges are reliably prevented.

## Claims

1. A single-use dispensing tip (70) for a multiple-use high-viscous dental material dispensing cartridge (60) insertable into an application ejector device (10), said dispensing tip comprising:
(a) a tubular part (72) with
(a-1) a proximal end (74) adapted for receiving a dispensing tube (66) of said cartridge, and
(a-2) a distal (76) end having a dispensing orifice (78), and
(b) a shielding element (80) having a side (82; 182)) facing an oral environment and an opposite side (84;184) facing away from the oral environment, whereby said shielding element shields against the oral environment during use.

2. A single-use dispensing tip (170) for a multiple-use high-viscous dental material dispensing cartridge (160) insertable into an application ejector device (10), said dispensing tip comprising:
(A) a tubular part (172) with
(A-1) a proximal end (174) adapted for insertion into an opening (166) in said cartridge, and
(A-2) a distal end (176) having a dispensing orifice (178), and
(B) a shielding element (80) having a side (82;182) facing an oral environment and an opposite side (84;184) facing away from the oral environment, whereby said shielding element shields against the oral environment during use.

3. The dispensing tip according to claim 1 or 2, whereby said shielding element is provided at the proximal end of the tubular part.

4. The dispensing tip according to one of claims 1 to 3, whereby said shielding element is a flexible circular disc collar.

5. The dispensing tip according to one of claims 1 to 3, whereby the shielding element is an elastic envelope.

6. The dispensing tip according to claim 5, whereby the elastic envelope is a flexible tubular sheath with a first and second end, whereby said first end is connected to the tubular part.

7. The dispensing tip according to claim 6, whereby the second end can be tightened, preferably by a cord or ribbon.

8. The dispensing tip according to any one of claims 5 to 7, whereby said elastic envelope is folded up or rolled up prior to use.

9. The dispensing tip according to any one of claims 1 to 8, whereby said tubular part can be bent for accommodating the oral situation.

10. A high-viscous dental material application system comprising:
(a) an application ejector device (10) comprising
(a-1) a cartridge receiving section (40) having an opening (42) and an aperture (44) in its wall, and
(a-2) a movable plunger (20);
(b) a multiple-use high-viscous dental material cartridge (60) for insertion into said cartridge receiving section through said opening, said cartridge having
(b-1) a cartridge body (61) with a proximal end (62) and a distal end (64), said cartridge body containing an amount of high-viscous dental material sufficient for application to more than one patient,
(b-2) a dispensing tube (66) at the distal end, said dispensing tube being adapted for
(i) insertion through said aperture in the wall of said cartridge receiving section,
(ii) protruding with a terminal section beyond said aperture, said terminal section alternately receiving a cap or a dispensing tip (70) according to claim 1, and
(b-3) a movable piston (63) adapted to be moved by said movable plunger for dispensing said dental material out of said dispensing tube; and
(c) the dispensing tip according to claim 1.

11. The system according to claim 10, whereby the length of said tubular part is greater than the length of said dispensing tube.

12. The system according to claim 10 or 11, whereby the terminal section of said dispensing tube is tapered.

13. The system according to any one of claims 10 to 12, whereby said dispensing tube is oriented at an angle of 0 to 90°, preferably 0 or about 45°, to the longitudinal axis of said cartridge body.

14. A high-viscous dental material application system comprising:
(A) an application ejector device (10) comprising
(A-1) a cartridge receiving section (140) having an opening (142) and an aperture (144) in its wall, and
(A-2) a movable plunger (20);
(B) a multiple-use high-viscous dental material cartridge (160) for insertion into said cartridge receiving section through said opening, said cartridge having
(B-1) a cartridge body (161) with a proximal end (162) and a distal end (164), said cartridge body containing an amount of high-viscous dental material sufficient for application to more than one patient,
(B-2) a cartridge opening (166) at the distal end, said cartridge opening being adapted for alternately receiving a plug (174') or the proximal end of the tubular part of the single-use dispensing tip according to claim 2, and
(B-3) a movable piston (63) adapted to be moved by said movable plunger for dispensing said dental material out of said cartridge opening; and
(C) the dispensing tip (170) according to claim 2.

15. The system according to claim 14, whereby said cartridge opening is oriented at an angle of 0 to 90°, preferably 0 or about 45°, to the longitudinal axis of said cartridge body.

16. The system according to one of claims 10 to 15, whereby the shielding element of said dispensing tip has a proximal surface matching with the opposing surface of said application ejector device.

17. The system according to one of claims 10 to 16, whereby the shielding element is adapted for being received by said aperture and/or said opening in said application ejector device.

18. The system according to one of claims 10 to 17, whereby said shielding element is a collar.

19. The system according to one of claims 10 to 18, whereby the tubular part and/or shielding element of the dispensing tip is adapted for engagement with said dispensing tube or cartridge opening of said cartridge and/or said aperture in said application ejector device with a positive lock.

20. The system according to claim 19, whereby said positive lock is a thread, a bayonet locking, or a snapping connection.

21. The system according to any one of claims 10 to 20, whereby the contact surfaces between the dispensing tip and the application ejector device or cartridge are adapted for a snug fit.

22. The system according to any one of claims 10 to 21, whereby said cartridge body has an information carrying surface layer.

23. The system according to any one of claims 10 to 22, whereby said application ejector device comprises a lid for closing the opening of said cartridge receiving section.

24. The system according to claim 23, whereby said lid is connected to said application ejector device by a snapping connection.

25. The system according to claim 23 or 24, whereby said lid is hinged to said cartridge receiving section.

26. The system according to claim 23 or 24, whereby said lid can be slid to said cartridge receiving section.

27. The system according to any one of claims 10 to 26, whereby said cartridge receiving section is connected to said application ejector device such that the cartridge receiving section can be rotated with regard to the longitudinal axis of the movable plunger of the application ejector device.

28. The system according to any one of claims 10 to 27, whereby said high-viscous dental material is a dental filling material, preferably curable by light.
